# EUROPÄISCHE PATENTSCHRIFT

(11) **EP 3 267 041 B1**
(45) Veröffentlichungstag und Bekanntmachung des Hinweises auf die Patenterteilung: **04.05.2022**
(21) Anmeldenummer: 17001137.3
(22) Anmeldetag: 04.07.2017
(51) Int. Cl.: F04D 29/22, B29C 45/40, B29C 33/48

(54) **VERFAHREN UND WERKZEUG ZUR HERSTELLUNG EINES LAUFRADES**
METHOD AND TOOL FOR PRODUCING AN IMPELLER
PROCÉDÉ ET OUTIL DE FABRICATION D'UNE ROUE PORTEUSE

(30) Priorität: 06.07.2016 DE 102016008127
(43) Veröffentlichungstag der Anmeldung: 10.01.2018
(73) Patentinhaber: WILO SE, 44263 Dortmund (DE)
(72) Erfinder: Bowe, Mario, 42929 Wermelskirchen (DE); Barth, Dennis, 58644 Iserlohn (DE); Kaiser, Christoph, 58507 Lüdenscheid (DE); Warkentin, Thomas, 58540 Meinerzhagen (DE)
(74) Vertreter: Cohausz Hannig Borkowski Wißgott

(56) Entgegenhaltungen:
- JP-A- 2008 303 740
- US-A- 3 837 612
- US-A1- 2012 104 654
- US-A1- 2014 328 689

## Beschreibung

Die Erfindung betrifft ein Verfahren zur Herstellung eines insbesondere für eine Kreiselpumpe bestimmten Laufrades durch Spritzgießen, das in zumindest zwei Raumrichtungen gekrümmte Schaufeln auf einer Tragscheibe und zwischen diesen vorwiegend in radialer Richtung verlaufende Strömungskanäle aufweist, die jeweils durch mindestens zwei Kernteile definiert werden, von denen ein erstes Kernteil hinterschneidungsfrei in dem entsprechenden Strömungskanal einliegt und ein zweites Kernteil mit einer Hinterschneidung im Strömungskanal in Eingriff steht. Darüber hinaus betrifft die Erfindung ein Spritzwerkgusswerkzeug zur Herstellung eines solchen insbesondere für eine Kreiselpumpe bestimmten Laufrades durch Spritzgießen.

Pumpenlaufräder, insbesondere die Laufräder von Kreiselpumpen, weisen typischerweise mehrere Schaufeln auf, die auf einer Tragscheibe so angeordnet sind, dass zwischen den Schaufeln vorwiegend in radialer Richtung verlaufende Strömungskanäle gebildet sind. Zur Herstellung eines so genannten gedeckten Laufrades wird auf der der Tragscheibe axial gegenüber liegenden Seite der Schaufeln eine Deckscheibe angeordnet, die die Strömungskanäle in axialer Richtung begrenzt. Bei dieser Ausführungsvariante des Laufrades wird durch eine zentrale Öffnung der Deckscheibe ein Saugmund gebildet, der durch einen sich axial erstreckenden Saughals verlängert sein kann. Im Betrieb der Pumpe wird zu fördernde Flüssigkeit durch den Saugmund angesaugt, nahezu rechtwinklig umgelenkt, beschleunigt und annähernd radial durch die Strömungskanäle nach außen gefördert. Fehlt die Deckscheibe, spricht man von einem offenen Laufrad.

Die Herstellung von Laufrädern erfolgt typischerweise mittels Spritzgussverfahren, bei denen Werkzeugteile die mit Formmasse auszufüllende Kavität begrenzen und die Strömungskanäle durch Kernteile innerhalb der Kavität definiert werden. Nach dem Aushärten der Formmasse werden die Kernteile aus den Strömungskanälen entfernt. Bei der Formmasse kann es sich um einen Kunststoff oder einen spritzbaren metallischen Werkstoff handeln.

Zur Optimierung der Strömungseigenschaften des Laufrades und Erreichen eines höheren Wirkungsgrades sind die Schaufeln häufig gegenüber einer rein radialen und/ oder einer rein axialen Erstreckung zumindest in einem Teilbereich gekrümmt. Aufgrund dieser komplexen Geometrie weist zumindest ein Kernteil zwangsläufig Hinterschneidungen auf, die verhindern, dass es ohne Weiteres aus dem Strömungskanal entfernbar ist, was die Herstellung im Spritzgießverfahren deutlich erschwert und aufwändige und teure Werkzeuge erforderlich macht.

Zur Herstellung von Laufrädern mit in zumindest zwei Raumrichtungen gekrümmten Schaufeln und einer zusätzlichen Deckscheibe wird in der europäischen Patentanmeldung EP 2 202 044 A1 ein Verfahren vorgestellt, bei dem die die Strömungskanäle definierenden Kerne jeweils aus zumindest zwei in axialer Richtung übereinander liegenden Kernteilen gebildet sind, wobei nach dem Spritzgießen zunächst ein erstes Kernteil aus dem Strömungskanal herausgezogen wird. Anschließend erfolgt vor oder während des Herausziehens eines zweiten Kernteils eine zusätzliche Relativbewegung zwischen Laufrad und dem zweiten Kernteil in einer Richtung quer zur Zielrichtung des zweiten Kernteils. In Ihrer Gesamtheit werden die zweiten Kernteile dabei im Wesentlichen radial nach außen entlang einer gekrümmten Bahn in Längsrichtung des Strömungskanals herausgezogen. Diese Lösung führt zum einen dazu, dass ein vergleichsweise komplexer mechanischer Aufbau notwendig ist um die Vielzahl an Kernteilen auf gekrümmten Bahnen zu bewegen, und zum anderen dazu, dass durch die Bewegung in radialer Richtung ein vergleichsweise langer Weg zurückgelegt werden muss, um das Laufrad zu entformen. Da bei den Bewegungsgeschwindigkeiten Grenzen bestehen, braucht der Entformungsprozess entsprechend viel Zeit.

Die US 3,837,612 A offenbart ein Spritzgusswerkzeug zur Herstellung von Laufrädern mit gekrümmten Schaufeln und zwischen diesen verlaufenden Strömungskanälen, die jeweils durch zwei Kernteile definiert sind, wobei ein erstes Kernteil hinterschneidungsfrei in dem Strömungskanal einliegt und ein zweites Kernteil mit Hinterschneidungen in den Strömungskanälen in Eingriff steht. Zum Freistellen des Laufrades wird zwischen dem ersten und dem zweiten Kernteil eine axiale Relativbewegung durchgeführt. Aus der US 3,837,612 A geht jedoch nicht hervor, auf welche Weise das Laufrad anschließend von dem zweiten Kernteil entformt wird.

Zur Entformung eines Laufrades lehrt die JP 2008 303740 A, die ebenfalls axial verschiebbare Kernteile zur Herstellung von Laufrädern offenbart, das Vorsehen eines Stabelements am Laufrad, mittels dem das Laufrad von den Kernteilen entformt wird.

Durch die US 2014/0328689 A1 wird ebenfalls ein Spritzgusswerkzeug zur Herstellung von Laufrädern gezeigt, dessen Kernteile zueinander in axialer Richtung bewegt werden, um das Laufrad zu entformen, wobei eines der Kernteile zur Entformung eine kombinierte axiale und rotatorische Bewegung vollführt. Aufgabe der Erfindung ist es, die genannten Nachteile zu überwinden und ein Verfahren sowie eine Vorrichtung zum Herstellen eines Laufrades mit gekrümmten Schaufeln bereitzustellen, bei dem möglichst wenige Kernteile bewegt werden müssen und die Kernteile auf einfache Weise auf möglichst kurzen Verfahrwegen bewegt werden können.

Diese Aufgabe wird durch ein Verfahren mit den in Anspruch 1 genannten Schritten sowie durch ein Spritzgusswerkzeug mit den in Anspruch 6 genannten Merkmalen gelöst. Bevorzugte Ausführungsformen ergeben sich aus den jeweiligen Unteransprüchen sowie der nachfolgenden Beschreibung.

Das erfindungsgemäße Verfahren zur Herstellung eines Pumpenlaufrades, insbesondere für ein Laufrad einer Kreiselpumpe, ist dadurch gekennzeichnet, dass Auswerfer das spritzgegossene Laufrad bei der zweiten Relativbewegung von den zweiten Kernteilen in axialer Richtung wegdrücken.

Das Spritzgießen des Laufrades erfolgt dabei auf an sich bekannte Art und Weise, indem eine durch Werkzeugteile und die Kerne begrenzte Kavität, die die Form, Lage und Krümmung der Schaufeln und der Tragscheibe definiert, mit einer Formmasse gefüllt wird. Anschließend erfolgt die erfindungsgemäße Entformung des Laufrades durch eine erste, linear-axiale Relativbewegung und eine zweite, axial-rotatorische Relativbewegung. Durch die erste Relativbewegung werden -aus Sicht des Laufrads- zunächst die ersten Kernteile aus dem Strömungskanal bewegt, die in axialer Richtung nicht durch Hinterschneidungen mit den Schaufeln in Eingriff stehen. Dabei kann das Laufrad axial gedrückt oder gezogen werden. Die axiale Richtung bezeichnet hier die Richtung der Laufradachse bzw. eine dazu parallele Richtung. Die erste Relativbewegung führt dazu, dass in den Strömungskanälen zwischen den Schaufeln und den zweiten Kernteilen jeweils ein Freiraum entsteht, der bei der zweiten Relativbewegung genutzt wird.

Zur Entformung der die Schaufeln hinterschneidenden zweiten Kernteile wird das Laufrad durch die zweite Relativbewegung von den zweiten Kernteilen in axialer Richtung weg bewegt, wobei die Schaufeln dabei an den zweiten Kernteilen unter Vollführung einer Drehbewegung in die zuvor freigewordenen Freiräume hinein entlang gleiten. Auch hier kann das Laufrad axial gedrückt oder gezogen werden, wobei ein Drücken bevorzugt ist, da die Drehbewegung dann automatisch erfolgt und nicht etwa gesteuert oder koordiniert werden muss. Die Bewegung der Schaufeln in die Freiräume der Strömungskanäle führt dazu, dass die zweiten Kernteile keine Hinterschneidung mehr gegenüber den Schaufeln aufweisen und somit das Laufrad bezüglich der Kernteile vollständig entformt ist.

Das Ausfüllen der Strömungskanälen durch in Umfangsrichtung geteilte Kerne in Verbindung mit den beiden axialen Relativbewegungen zur Laufradentformung führt einerseits zu kürzeren Verfahrwegen der Kernteile, da die Abmessungen der Schaufeln bei Laufrädern für Kreiselpumpen, insbesondere bei Radialrädern oder Halbaxialrädern, typischerweise in axialer Richtung kleiner sind als in radialer Richtung. Verkürzte Verfahrwege der Kernteile führen in der Konsequenz zu einem schnelleren Entformungsprozess. Auf diese Weise lassen sich die Produktionszeiten signifikant verkürzen.

Durch die erste linear-axiale Relativbewegung und durch die zweite rotatorisch-axiale Relativbewegung wird ein Führen von Kernteilen entlang gekrümmter Bahnen vermieden. Vielmehr erfolgt die Bewegung der Kernteile nur linear, wodurch das Spritzgusswerkzeug mechanisch, insbesondere hinsichtlich des bzw. der Antriebe einfacher und preisgünstiger ist und ferner einen geringeren Wartungsaufwand und höhere Standzeiten ermöglicht. Weiterhin lässt sich durch die Bewegung der Kernteile auf axialen Bahnen eine kompakte Bauform des Spritzgusswerkzeugs erzielen. Dies ermöglicht den Aufbau von Multikavitäten-Werkzeuge auf engem Raum.

In einer vorteilhaften Ausführung der Erfindung können bei der ersten Relativbewegung die zweiten Kernteile das spritzgegossene Laufrad von den ersten Kernteilen in axialer Richtung wegdrücken. Die ersten Kernteile werden also aus Sicht des Laufrades durch eine Bewegung der zweiten Kernteile aus dem jeweiligen Strömungskanal entfernt. Somit können die ersten Kernteile stationär sein. Dies bietet den Vorteil, dass nur die zweiten Kernteile angetrieben werden müssen, wobei sich das Laufrad mitbewegt. Die Anzahl der beweglichen Komponenten reduziert sich somit.

Bei der zweiten Relativbewegung wird das spritzgegossene Laufrad von den zweiten Kernteilen mittels Auswerfer in axialer Richtung weggedrückt. Hierbei bleiben nun auch die zweiten Kernteile stehen, wobei sich lediglich die Auswerfer in axialer Richtung relativ bewegen und zwar sowohl zu den zweiten als auch den ersten Kernteilen. Dies ermöglicht dem Laufrad, die Drehbewegung relativ zu den zweiten Kernen zu vollführen. Dabei gleiten die Schaufeln auf den zweiten Kernteilen. Durch diese Kombination aus einer axialen Bewegung der Auswerfer samt Laufrad und der durch das Gleiten der Schaufeln entlang der zweiten Kernteile hervorgerufenen Drehbewegung werden die Hinterschneidungen der Schaufeln gegenüber den zweiten Kernteilen überwunden, so dass Laufrad vollständig entformt werden kann. Das Wegdrücken des Laufrades durch die Auswerfer hat den Vorteil, dass die Hinterschneidungen allein aufgrund der aktiv bewirkten Axialbewegung überwunden werden können, wobei die zum Entformen notwendige Drehbewegung des Laufrades automatisch erfolgt. Die Drehbewegung wird folglich durch die axial wirkende Druckkraft erzwungen.

Die Auswerfer können eine Stirnseite aufweisen, die plan mit der Oberfläche der zweiten Kernteile abschließt und somit die Kavität mit begrenzt. Hierdurch wird erreicht, dass diese Stirnseite nach dem Spritzgießen des Laufrads bei der zweiten Relativbewegung gegen die Tragscheibe drückt, um diese von den zweiten Kernteilen weg zu bewegen.

Da bereits durch eine kurze Axialbewegung zwischen dem Laufrad und den ersten Kernteilen der Freiraum zwischen den Schaufel und den ersten Kernteilen geschaffen wird, muss mit dem Beginn der zweiten Relativbewegung nicht abgewartet werden, bis das Laufrad bei der ersten Relativbewegung vollständig axial vor den ersten Kernteilen liegt. Vielmehr kann die zweite Relativbewegung schon während der ersten Relativbewegung beginnen, insbesondere kurz nach der ersten Relativbewegung. Dies bedeutet, dass sich die zweiten Kernteile und die Auswerfer zumindest zeitweise gleichzeitig bewegen können. Da die Bewegungen idealerweise voneinander entkoppelt, d.h. unabhängig sind können die zweiten Kernteile und die Auswerfer mit gleichen oder auch unterschiedlichen Geschwindigkeiten gefahren werden. Die zumindest teilweise gleichzeitige Durchführung der Relativbewegungen hat den Vorteil, dass das Laufrad schneller entformt wird und dadurch der Produktionsprozess des Laufrades verkürzt wird.

Die Auswerfer können stabförmig ausgebildet sein. In einer Ausführungsvariante können die Auswerfer innerhalb der zweiten Kernteile axial geführt sein. Dies bedeutet, dass die Auswerfer lediglich während bzw. für die zweite Relativbewegung aus den zweiten Kernteilen heraustreten müssen, d.h. während der ersten Relativbewegung innerhalb der zweiten Kernteile verbleiben.

Auf diese Weise wird eine Bewegung der Auswerfer quer zur axialen Richtung vermieden.

Zur Herstellung kleinerer Laufräder kann es sein, dass die Teilung eines in einem Strömungskanal liegenden Kerns in Umfangsrichtung in ein stationäres erstes und ein bewegtes zweites Kernteil entsprechend der vorliegenden Erfindung es nicht zulässt, die Auswerfer in den zweiten Kernteilen zu führen. In diesem Fall können die Auswerfer innerhalb der ersten Kernteile axial geführt sein.

Mit dem erfindungsgemäßen Verfahren können sowohl offene als auch gedeckte Laufräder hergestellt werden. Zur Herstellung eines gedeckten Laufrades kann eine separat hergestellte, insbesondere spritzgegossene Deckscheibe auf den Oberkanten der Schaufeln des entformten Laufrades befestigt werden. Dies kann beispielsweise durch Kleben oder mittels Ultraschallschweißen erfolgen. Vorzugsweise kann die Oberkante der Schaufeln einen Materialvorsprung aufweisen, der in eine korrespondierende, längliche Vertiefung in der der Tragscheibe zugewandten Unterseite der Deckscheibe einliegen kann. Hierdurch wird ein Formschluss erreicht, der eine zentrierte Ausrichtung der Deckscheibe gegenüber der Tragscheibe für die anschließende Befestigung erleichtert und einen Verrutschen der Deckscheibe auf den Schaufeln verhindert. Zudem hat der Materialvorsprung eine besondere technische Wirkung für das Ultraschallschweißen, da er infolge der lokalen Erhitzung schmelzen und somit eine stoffschlüssige Verbindung zwischen den Schaufeln und der Deckscheibe bilden kann. Somit kann eine dauerhafte feste Verbindung zwischen den Deckscheibe und Schaufeln erreicht werden, ohne dass der Strömungsweg durch etwaige Kleberückstände nachteilig beeinflusst wird.

Ein erfindungsgemäßes Spritzgusswerkzeug zur Herstellung eines Pumpenlaufrades, insbesondere für ein Laufrad einer Kreiselpumpe, durch Spritzgießen zeichnet sich dadurch aus, dass das erste und der zweite Kernteil jedes Strömungskanals in Umfangsrichtung hintereinander angeordnet und relativ zueinander in axialer Richtung bewegbar sind, wobei das Spritzgusswerkzeug zur Entformung des spritzgegossenen Laufrades eingerichtet ist, zunächst eine linear-axiale Relativbewegung zwischen den ersten Kernteilen und dem Laufrad durchzuführen, um die ersten Kernteile aus den Strömungskanälen zu bewegen, und anschließend das Laufrad durch eine zweite Relativbewegung in axialer Richtung von den zweiten Kernteilen unter Vollführung einer Drehbewegung wegzubewegen. Wie bereits in Bezug auf das erfindungsgemäße Verfahren angesprochen, bewegen Auswerfer das Laufrad von den zweiten Kernteilen weg. In entsprechender Weise weist das erfindungsgemäße Spritzgusswerkzeug diese Auswerfer auf.

Das erfindungsgemäße Spritzgusswerkzeug ist somit dazu eingerichtet, das erfindungsgemäße Verfahren auszuführen. Es erreicht somit ausschließlich durch axiale Relativbewegungen der Kernteile eine Entformung des spritzgegossenen Laufrades. Dabei ist der Verfahrweg, den die Kernteile zur Entformung zurücklegen müssen, gegenüber dem Stand der Technik reduziert, so dass eine schnellere Entformung des Laufrades möglich ist. Aufgrund der rein linear bewegten Teile, ist die Realisierung und Wartung des Spritzgusswerkzeugs sowie seines Antriebs einfacher als bei einer radialen Führung, insbesondere gekrümmten Führung der Kernteile.

Vorzugsweise wird ein Kunststoff, beispielsweise ein Thermoplast oder Duroplast, oder ein spritzbarer metallischer Werkstoff als Formmasse verwendet, um das Laufrad spritzzugießen.

Ein besonders kompakter Aufbau des Spritzgusswerkzeugs kann dadurch erreicht werden, dass die ersten Kernteile einteilig mit einem stationären Führungsblock des Spritzgusswerkzeugs ausgebildet sind, in dem die zweiten Kernteile axial beweglich zwischen den ersten Kernteilen geführt sind. Der Führungsblock bildet eine Einheit, die zu Wartungszwecken entnehmbar im Spritzgusswerkzeug eingesetzt ist. Die ersten Kerne müssen somit nicht einzeln eingesetzt werden. Die ersten Kernteile können gemäß einer Ausführungsvariante einzeln hergestellt und anschließend zu dem oder mit dem Führungsblock zu einer Einheit assembliert sein. Bevorzugt können die ersten Kernteile aber auch einstückig ausführt sein und den Führungsblock in Gestalt eines massiven Block bilden. Damit entfällt der Assemblieraufwand.

Außerdem bietet ein einstückiger Führungsblock den Vorteil, dass sich Kanäle durch ihn hindurchziehen können, durch welche eine Flüssigkeit zur Temperierung des Führungsblocks gefördert werden kann, ohne dass Maßnahmen zur Abdichtung von Kanalübergängen zwischen den ersten Kernteilen erforderlich wären. Darüber hinaus liegen aufgrund der Einstückigkeit keine thermischen Barrieren zwischen den ersten Kernteilen vor, so dass alle ersten Kernteile eine weitestgehend gleiche Temperaturverteilung bei der Temperierung aufweisen können.

Der Führungsblock besitzt zu den zweiten Kernteilen in Form und Größe korrespondierende Ausnehmungen, in denen die zweiten Kernteile formschlüssig, axial gleitend gehalten sind. Der Führungsblock dient somit der axialen Führung der zweiten Kernteile, so dass sich diese nicht quer zur Laufradachse bewegen können.

Dadurch, dass die zweiten Kernteile vom Führungsblock umfänglich umgriffen werden, kann durch den Führungsblock mittelbar auch eine Temperierung der zweiten Kernteile realisiert werden.

Vorzugsweise kann der Führungsblock derart ausgebildet sein, dass die ersten Kernteile jeweils an ihrem radial innenliegenden Ende in einen gemeinsamen, eine Laufradnabe zumindest mit definierenden Ring übergehen. Dadurch werden die radial innenliegenden Enden der ersten Kernteile mechanisch stabilisiert und so die Stabilität des gesamten Führungsblocks erhöht.

Gemäß einer Ausführungsvariante der Erfindung können das erste Kernteil und das zweite Kernteil jedes Strömungskanals eine sich achsparallele zur Laufradachse erstreckende Kontaktfläche aufweisen. Die ersten und zweiten Kernteile liegen an dieser Kontaktfläche aneinander an. Durch diese achsparallele Orientierung Kontaktfläche weist die Vorderseite des ersten Kernteils gegenüber der Rückseite des zweiten Kernteils keine Hinterschneidung auf, so dass eine linear-axiale Relativbewegung möglich ist.

Diese können gemäß einer Ausführungsvariante in den zweiten Kernteilen axial beweglich geführt sein, um auf das Laufrad, genauer gesagt auf die Tragscheibe, bei der zweiten Relativbewegung in axialer Richtung von den zweiten Kernteilen weg eine Axialkraft ausüben zu können, durch welche das Laufrad in axialer Richtung von den zweiten Kernteilen weggedrückt wird. Dabei können die Auswerfer jeweils an einem laufradseitigen Ende mit ihrer Stirnfläche plan mit dem jeweiligen zweiten Kernteil abschließen, um mit der Tragscheibe des Laufrades in Kontakt zu stehen. Bei der zweiten Relativbewegung treten die Stirnflächen dann aus den zweiten Kernteilen heraus und schieben das Laufrad von den zweiten Kernteilen weg. Gemäß einer anderen Ausführungsvariante können die Auswerfer in den ersten Kernteilen axial beweglich geführt sein.

Geeigneterweise kann die Anzahl der Auswerfer der Anzahl der zweiten Kernteile entsprechen. Es können aber auch weniger Auswerfer als Kernteile vorhanden sein. Die Auswerfer können symmetrisch, äquidistant über den Umfang verteilt angeordnet sein. So können beispielsweise bei Laufrädern mit dicken, stabilen Tragscheiben nur vier oder sogar nur drei Auswerfer genügen, obgleich das Laufrad gegebenenfalls deutlich mehr, z.B. 7, 8, 9, 10, 11, 12 oder 13 Schaufeln und entsprechend viele erste und zweite Kernteile aufweist.

Durch die auf das Laufrad wirkende Axialkraft wird von den Schaufeln eine axiale Kraft auf die die Hinterschneidung bildenden Bereich der der jeweiligen Schaufel zugewandten Seite der zweiten Kernteile ausgeübt. Diese wird jedoch aufgrund der fehlenden axialen Beweglichkeit und aufgrund der Schrägstellung, bzw. Krümmung der Schaufeln in eine Tangentialkraft umgelenkt, so dass ein Drehmoment auf das Laufrad wirkt, infolgedessen es zu der Drehbewegung des Laufrades relativ zu den zweiten Kernteilen kommt. Die Schaufeln gleiten dabei auf der Vorderseite der zweiten Kernteile. Gleichzeitig gleitet die Tragscheibe des Laufrades auf den Stirnflächen der Auswerfer.

Gemäß einer vorteilhaften Ausführungsvariante können die Auswerfer eine erste, äußere ringförmige Anordnung bilden, wobei zusätzlich eine zweite, innere ringförmige Anordnung von Auswerfern vorhanden sein kann. Diese bilden somit innere Auswerfer, die auf einem Ring liegen, der innerhalb der ersten Anordnung, insbesondere konzentrisch zu dieser angeordnet ist. Durch die innere und äußere Anordnung der Auswerfer kann bei einer axialen Bewegung der Auswerfer gegenüber den Kernteilen eine gleichmäßige Kraftverteilung auf die Tragscheibe des Laufrades ausgeübt und dieses somit gleichmäßig von den Kernteilen weggedrückt werden. Somit werden beim Auswerfen Spannungen am spritzgegossenen Laufrad reduziert und eine Verformung und/ oder Schäden am Laufrad verhindert. Ferner wird die Maßhaltigkeit gewährleitet. Geeigneterweise sind hierfür die inneren und die äußeren Auswerfer synchron bewegbar bzw. synchron bewegt.

Die inneren Auswerfer können ebenso wie die äußeren Auswerfer in den zweiten Kernteilen axial geführt sein. Alternativ können die inneren Auswerfer in den ersten Kernteilen axial geführt sein. Um aber noch weiter an die Laufradachse heranzukommen und somit die Axialkraft noch gleichmäßiger verteilen zu können, können die inneren Auswerfer in den radial innenliegenden Enden der ersten Kernteile oder vorzugsweise innerhalb des Rings gehalten sein, in den die ersten Kernteile übergehen. In einer anderen Ausführungsvariante ist es durchaus möglich, dass die äußeren Auswerfer in den ersten Kernteilen und die inneren Auswerfer in den zweiten Kernteilen axial geführt sind.

Vorzugsweise können alle zweiten Kernteile auf oder an einer gemeinsamen linear-verschieblichen Basisplatte befestigt sein. Durch eine lineare Verschiebung dieser Basisplatte können somit alle zweiten Kernteile synchron bewegt werden, sodass das Laufrad umfänglich gleichmäßig von den ersten Kernteilen entfernt wird. Die zweiten Kernteile müssen somit nicht einzeln aktiv bewegt bzw. angetrieben werden. Vielmehr ist für ihre axiale Bewegung nur die Basisplatte entsprechend zu bewegen. Die Basisplatte kann beispielsweise hydraulisch, pneumatisch oder elektromechanisch, beispielsweise mittels Stellmotor bewegt bzw. angetrieben werden.

Kumulativ oder alternativ zur Basisplatte können die Auswerfer auf oder an einer gemeinsamen, linear-verschieblichen Auswerferplatte befestigt sein. Durch eine lineare Verschiebung dieser Auswerferplatte können somit alle mit ihr verbundenen Auswerfer synchron bewegt werden, sodass das Laufrad umfänglich gleichmäßig von den zweiten Kernteilen entfernt wird. Die Auswerfer müssen somit nicht einzeln aktiv bewegt bzw. angetrieben werden. Vielmehr ist für ihre axiale Bewegung nur die Auswerferplatte entsprechend zu bewegen. Die Auswerferplatte kann ebenfalls beispielsweise hydraulisch, pneumatisch oder elektromechanisch, beispielsweise mittels Stellmotor bewegt bzw. angetrieben werden.

Grundsätzlich kann eine erste, insbesondere eine äußere Auswerferplatte vorhanden sein, auf oder an der alle äußeren Auswerfer befestigt sind, sowie eine zweite, insbesondere eine innere Auswerferplatte vorhanden sein, auf oder an der alle innen Auswerfer befestigt sind. Zwar können die innere und die äußere Auswerferplatte unabhängig voneinander bewegbar sein, jedoch ist zum Zwecke einer gleichmäßigen Kraftbeaufschlagung des Laufrads eine synchrone Bewegung und damit ein gemeinsamer Antrieb beider Auswerferplatten sinnvoll. Konstruktiv einfach ist es, wenn alle Auswerfer auf oder an einer gemeinsamen Auswerferplatte angeordnet sind, d.h. sowohl die äußeren Auswerfer als auch die inneren Auswerfer. Somit müssen keine zwei zu synchronisierenden Antriebe vorgesehen werden.

Eine besonders kompakte Ausführungsform des Spritzgusswerkzeugs wird erreicht, wenn die Basisplatte zwischen dem Führungsblock und der Auswerferplatte angeordnet ist und die Auswerfer in der Basisplatte geführt sind. Zwischen der Basisplatte und dem Führungsblock ist im Ausgangszustand unmittelbar nach dem Spritzgießen des Laufrads ein Abstand vorgesehen, um die Basisplatte gegebenenfalls mitsamt der Auswerferplatte, insbesondere synchron mit dieser, zur Ausführung der ersten Relativbewegung in Richtung Führungsblock zu verfahren. Auf diese Weise werden die zweiten Kernteile gegenüber den ersten Kernteilen axial ausgefahren, bzw. in Richtung des Laufrades bewegt. Ferner kann zwischen der Auswerferplatte und der Basisplatte im Ausgangszustand unmittelbar nach dem Spritzgießen des Laufrads ein Abstand vorgesehen sein, um die Auswerferplatte zur Ausführung der zweiten Relativbewegung in Richtung Basisplatte zu verfahren. Auf diese Weise werden die Auswerfer gegenüber den zweiten Kernteilen axial ausgefahren, bzw. in Richtung des Laufrades bewegt. Der jeweilige Abstand verringert sich dann durch die Bewegung entsprechend, wobei allerdings durch eine synchrone Bewegung zwischen der Basisplatte und der Auswerferplatte bei der ersten Relativbewegung der zwischen ihnen bestehende Abstand kontant gehalten wird.

Der Führungsblock kann bevorzugt auf einer weiteren Platte aufliegen, wobei sowohl der Führungsblock als auch die weitere Platte zueinander fluchtende axiale Öffnungen aufweist, durch die sich die zweiten Kernteile und die Auswerfer hindurch erstrecken.

Vorteilhafterweise ermöglicht die erfindungsgemäße Anordnung der Basisplatte, des Führungsblocks samt der ersten Kernteile, der zweiten Kernteile und der Auswerferplatte eine kompakte, robuste und einfach zu realisierende Ausführung des erfindungsgemäßen Spritzgusswerkzeuges. Für die Entformung des spritzgegossenen Laufrades sind somit nur zwei Antriebseinheiten notwendig, die die axiale Position der Basisplatte der zweiten Kernteile und der Auswerferplatte vorgeben. Bevorzugt können diese pneumatische, hydraulische oder elektromechanische Antriebe sein.

Weitere Merkmale und Vorteile der Erfindung werden nachfolgend anhand von Ausführungsvarianten und der beigefügten Figuren beschrieben. In diesen zeigt:
- Fig. 1: einen Formeinsatz mit Kernen für ein erstes erfindungsgemäßes Spritzgusswerkzeug in perspektivischer Darstellung;
- Fig. 2: einen Querschnitt durch einen Teilausschnitt des ersten Spritzgusswerkzeuges im Ausgangszustand vor dem Auswerfen;
- Fig. 3: eine Draufsicht auf den Formeinsatz;
- Fig. 4a: eine schematische Darstellung des Querschnitts entlang der Schnittlinie X-X aus Fig. 3 ohne Laufrad;
- Fig. 4b: eine schematische Darstellung des Querschnitts entlang der Schnittlinie Y-Y aus Fig. 3 mit Laufrad;
- Fig. 5a: einen Querschnitt durch einen Teilausschnitt des ersten Spritzgusswerkzeugs mit ausgefahrenen zweiten Kernteilen;
- Fig. 5b: eine bezüglich des Verfahrensstands Fig. 5a entsprechende schematische Darstellung des Querschnitts entlang der Schnittlinie Y-Y aus Fig. 3 mit Laufrad und ausgefahrenen zweiten Kernteilen;
- Fig. 6a: einen Querschnitt durch einen Teilausschnitt des ersten Spritzgusswerkzeugs mit ausgefahrenen zweiten Kernteilen und teilweise ausgefahrenen Auswerfern;
- Fig. 6b: eine bezüglich des Verfahrensstands Fig. 6a entsprechende schematische Darstellung des Querschnitts entlang der Schnittlinie Y-Y aus Fig. 3 mit Laufrad, ausgefahrenen zweiten Kernteilen und teilweise ausgefahrenen Auswerfern;
- Fig. 7a: einen Querschnitt durch einen Teilausschnitt des ersten Spritzgusswerkzeugs mit ausgefahrenen zweiten Kernteilen und vollständig ausgefahrenen Auswerfern;
- Fig. 7b: eine bezüglich des Verfahrensstands Fig. 7a entsprechende schematische Darstellung des Querschnitts entlang der Schnittlinie Y-Y aus Fig. 3 mit Laufrad, ausgefahrenen zweiten Kernteilen und vollständig ausgefahrenen Auswerfern;
- Fig. 8: einen anderen Formeinsatz mit Kernen für ein zweites erfindungsgemäßes Spritzgusswerkzeug in perspektivischer Darstellung;
- Fig. 9a: einen Querschnitt eines Teilausschnitts des zweiten Spritzgusswerkzeugs im Ausgangszustand vor dem Auswerfen;
- Fig. 9b: einen Querschnitt eines Teilausschnitts des zweiten Spritzgusswerkzeugs mit ausgefahrenen zweiten Kernteilen;
- Fig. 9c: einen Querschnitt eines Teilausschnitts des zweiten Spritzgusswerkzeugs mit ausgefahrenen zweiten Kernteilen und ausgefahrenen Auswerfern;
- Fig. 10a: ein erfindungsgemäß hergestelltes Pumpenlaufrad mit Tragscheibe und Schaufeln;
- Fig. 10b: eine Deckscheibe des Pumpenlaufrads in perspektivischer Darstellung;
- Fig. 11: fertiges Laufrad mit Tragscheibe, Schaufeln und Deckscheibe in perspektivischer Darstellung.

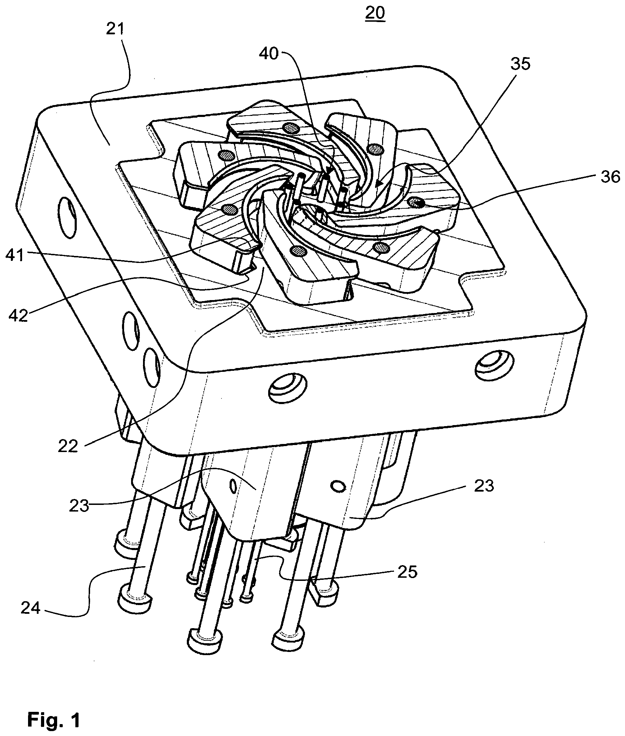

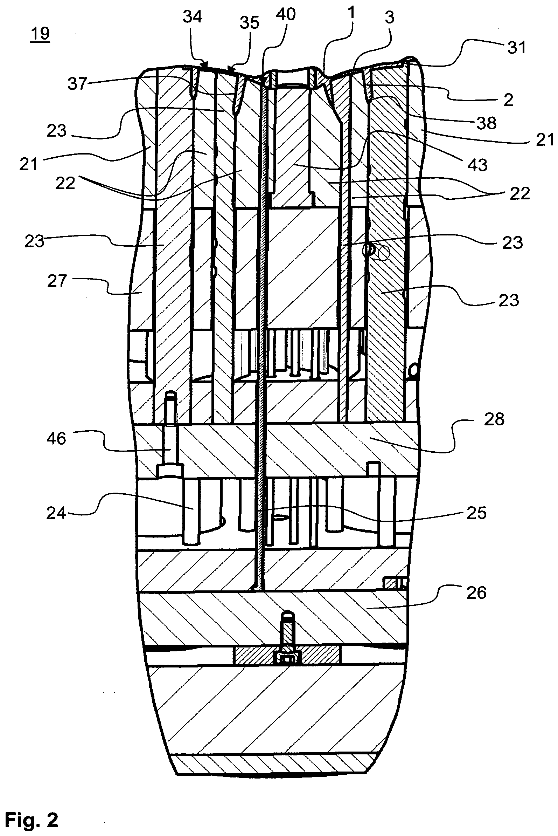

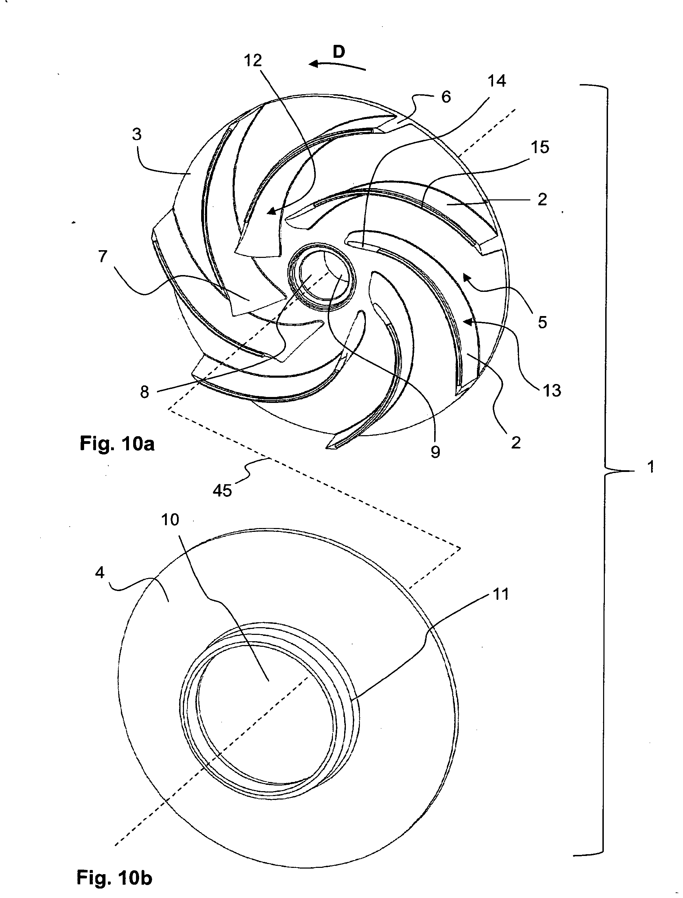

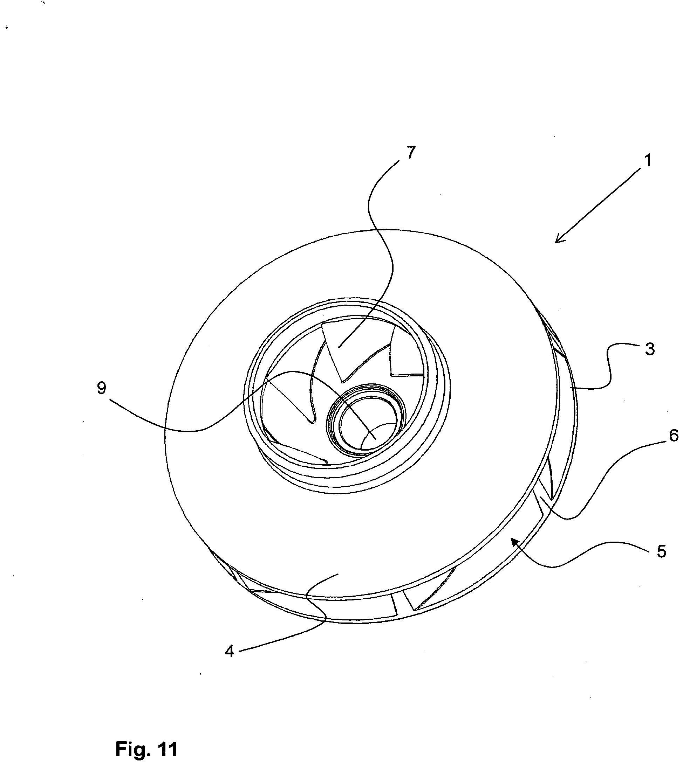

In Fig. 1 ist ein Formeinsatz 20 für ein erstes erfindungsgemäßes Spritzgusswerkzeugs 19 perspektivisch dargestellt, das in den Figuren 2, 5a, 6a und 7a in geschnittenen Teilen näher dargestellt ist und der Herstellung eines Laufrads 1 für eine Kreiselpumpe dient, wie es in den Figuren 10a und 11 dargestellt ist. Optional kann das Laufrad 1 eine in Fig. 10b gezeigte Deckscheibe 4 aufweisen, die an den Schaufeloberkanten 14 befestigt wird.

Das Laufrad besteht bevorzugt aus Kunststoff, der in Gestalt einer spritzbaren Formmasse in eine in dem Formeinsatz 20 ausgebildeten Kavität eingebracht wird. Das hergestellte Laufrad 1 weist eine Tragscheibe 3 auf, an der mehrere, beispielsweise sieben Schaufeln 2 einstückig angeformt sind. Zwischen den Schaufeln 2 sind Strömungskanäle 5 zur Förderung einer Flüssigkeit aus einem zentralen Bereich des Laufrades 1 im Wesentlichen radial nach außen vorhanden. Jede Schaufel 2 besitzt ein radial inneres Schaufelende 7 und ein radial äußeres Schaufelende 6, wobei sie sich vom inneren Schaufelende 7 bogenförmig zum radial äußeren Schaufelende erstreckt. Die Schaufeln sind somit in radialer Richtung gekrümmt. Zusätzlich besitzen sie eine Anstellung in axialer Richtung, die zum inneren Schaufelende 7 hin zunimmt. Dabei ist jede Schaufel 2 mit zunehmender Nähe zur Laufradachse 45 gegenüber einer Axialebene zunehmend gekippt, so dass sich die Schaufeln 2 an ihrem radial außenliegenden Ende 6 in axialer Richtung annähernd innerhalb der Axialebene erstrecken.

Wird das Laufrad 1 gemäß Fig. 10a, 11 im Betrieb entgegen dem Uhrzeigersinn (Pfeil D) gedreht, fördert es eine Flüssigkeit radial nach außen. Die innenliegenden Schaufelenden 7 sind gegenüber der Axialebene in Drehrichtung D verkippt. Man spricht hier auch davon, dass sie schräg angestellt sind. Bezogen auf die Drehrichtung besitzt somit jede Schaufel 2 eine Schaufelvorderseite 13 und eine Schaufelrückseite 12.

Das Laufrad 1 weist zudem eine Nabe 8 aus einem Metallring auf, an der das Laufrad 1 im verbauten Zustand in der Kreiselpumpe gelagert ist. Eine Öffnung 9 ist in der Nabe 8 vorgesehen, um eine Welle der Kreiselpumpe aufzunehmen und damit ein Drehmoment auf das Laufrad 1 zu übertragen.

Wie weiterhin aus Fig. 1 ersichtlich wird, weist der Formeinsatz 20 erste und zweite Kernteile 22, 23 auf, die die Strömungskanäle 5 des herzustellenden Laufrades 1 ausbilden, wobei die ersten Kernteile 22 und die zweiten Kernteile 23 in Umfangsrichtung hintereinander liegen. Somit liegt eine Trennlinie 47 zwischen den ersten und zweiten Kernteilen 22, 23 innerhalb der Strömungskanäle 5. Die zweiten Kernteile 23 stehen in der Fig. 1 gegenüber den ersten Kernteilen 22 axial etwas vor. Jedes Kernteil 22, 23 erstreckt sich im Wesentlichen bogenförmig entlang des gesamten Strömungskanals 5, so dass es in radialer Richtung keine weitere Unterteilung der Kerne vorliegt. Gleichwohl könnte eine solche Unterteilung durchaus möglich sein.

Die ersten Kernteile 22 sind alle einstückig miteinander sowie mit einem stationären Führungsblock 21 ausgebildet, der die radial außen liegenden Enden der ersten Kernteile 22 mit einander verbindet. Zur Verbesserung der Stabilität der ersten Kernteile 22 verbinden sich die radial innenliegenden Enden der ersten Kernteile 22 zu einem Ring 44, der ebenfalls Teil des Führungsblocks 21 ist. Der Führungsblock 21 ist ein feststehendes Teil des Spritzgusswerkszeugs 19 und hier beispielhaft von Kanälen durchzogen, um ein Temperiermedium und/ oder Druckluft zu den Kernteilen 22, 23 zu leiten.

Die ersten und zweiten Kernteile 22, 23 sind zur Entformung des spritzgegossenen Laufrades relativ zueinander linear-axial bewegbar. Hierzu sind die zweiten Kernteile 23 axial beweglich in dem Führungsblock 21 bzw. zwischen den ersten Kernteilen 22 geführt. Um auch nach dem teilweisen Herausfahren aus dem Führungsblock 21 eine Führung zu haben, ist die axiale Länge der zweiten Kernteile 23 größer, insbesondere 2 bis 3 mal so groß wie die axiale Länge der ersten Kernteile 22. Ein die zweiten Kernteile 23 axial verschiebender Antrieb ist in Fig. 1 nicht gezeigt.

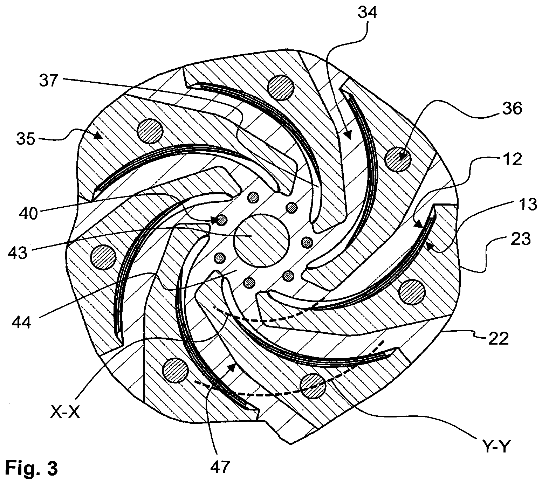

Wie sich insbesondere auch aus Figur 3 ergibt, ist im Uhrzeigersinn betrachtet zwischen jedem ersten Kernteil 22 eines Strömungskanals 5 und dem zweiten Kernteil 23 des benachbarten nächsten Strömungskanals 5 eine Schaufelkavität 37 zur Ausbildung einer entsprechenden Schaufel 2 des Laufrads 1 vorhanden. Die Schaufelkavität 37 ist derart ausgeführt, dass die Anstellung der Schaufel 2 bezogen auf die Tragscheibe 3 mit zunehmender Nähe zur Laufradachse 45 zunimmt. Dies bedeutet, dass der radial innenliegende Bereich 7 der Schaufeln 2 von den zweiten Kernteilen 23 hinterschnitten ist, also ein Teil der zweiten Kernteile 23 in der Draufsicht gemäß Fig. 3 oberhalb der Schaufeln 2 bzw. zwischen Schaufel 2 und Tragscheibe 3 liegt, so dass die zweiten Kernteile 23 nicht ohne Weiteres axial entformt werden können. Demgegenüber sind die ersten Kernteile 22 frei von Hinterschneidungen mit den Laufradschaufeln 2, so dass diese frei aus den Strömungskanälen 5 heraus bewegt werden können bzw. eine Relativbewegung zwischen ihnen und dem Laufrad 1 erlauben.

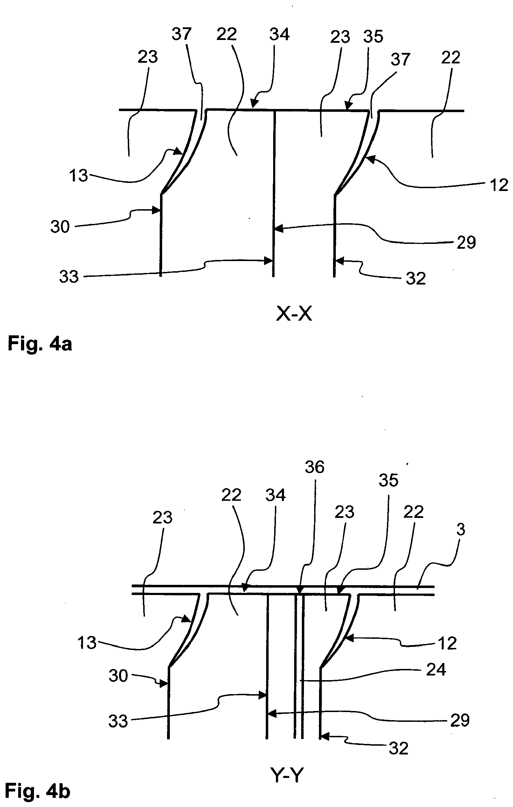

Wie sich insbesondere nun aus Fig. 4a, 4b ergibt, weisen die ersten und zweiten Kernteile 22, 23 in Entsprechung zu den Schaufeln 2 jeweils auch eine Vorderseite 30, 33 und eine Rückseite 29, 32 auf. Bei den hintereinander angeordneten Kernteilen 22, 23 ist somit die Vorderseite 33 des zweiten Kernteils 23 mit der Rückseite 29 des ersten Kernteils 23 in Kontakt. Ferner definiert die Vorderseite 30 des ersten Kernteils 22 die Rückseite 12 der auszubildenden Schaufel 2 und die Rückseite 32 des zweiten Kernteils 23 die Vorderseite 13 der auszubildenden Schaufel 2.

In dieser ersten Ausführungsform gemäß der Figuren 1 bis 7b ist eine ringförmige Anordnung äußerer Auswerfer 24 vorhanden, wobei diese Auswerfer 24 innerhalb der zweiten Kernteile 23 axial geführt sind. Zur Definition der Kavität 31 für die Tragscheibe 3 liegen die Stirnseiten 35 der zweiten Kernteile 23 mit den Stirnseiten 36 der äußeren Auswerfer 24 bündig in einer Fläche liegen, so dass der Übergang der Stirnseiten 36 der Auswerfer 24 und zweiten Kernteilen 23 stufenlos ist.

Die erste Ausführungsform weist ferner innere Auswerfer 25 auf, die ebenfalls eine ringförmige Anordnung bilden, welche konzentrisch zur äußeren ringförmigen Anordnung liegt. Wie man in Fig. 1 erkennen kann, sind die inneren Auswerfer 25 um die gleiche Wegstrecke wie die äußeren Auswerfer 24 bzw. die zweiten Kernteile 23 gegenüber den ersten Kernteilen 22 aus dem Führungsblock 21 heraus bewegt. Dabei sind die inneren Auswerfer 25 innerhalb des Führungsblockes 21 geführt. Sie dienen dazu, auf den radial inneren Bereich der Tragscheibe 3 des Laufrades 1 bei der Entformung eine Axialkraft auszuüben.

Wie in Fig. 1 weiter zu sehen ist, weisen die zweiten Kernteile 23 an ihren radial äußeren Bereichen in tangentialer Richtung Vorsprünge 41 auf, die von korrespondierenden Vertiefungen 42 im Führungsblock 21 am radialen Ende der ersten Kernteile 22 aufnehmbar sind. Auf diese Weise bilden die Vertiefungen 42 Schultern, die für die Vorsprünge 41 beim Zurückfahren der zweiten Kernteile 23 Anschläge bilden. Dadurch wird sichergestellt, dass die Stirnseiten 35 der zweiten Kernteile 23 im eingefahrenen Zustand nahezu übergangslos eine bündige Fläche bilden.

Fig. 2 zeigt den Querschnitt eines Teilausschnitts des Spritzgusswerkzeugs 19, wobei die zweiten Kernteile 23, die äußeren Auswerfer 24 und die inneren Auswerfer 25 eingefahren sind. Das Laufrad 1 ist dabei bereits spritzgegossen, d.h. die Schaufelkavität 37 und die Tragscheibenkavität 31 mit der Formmasse ausgefüllt sind. Dies ist der Ausgangszustand vordem Entformen des Laufrades 1.

Der Führungsblock 21 liegt auf einer stationären Platte 27 auf, die Öffnungen aufweist, in denen die zweiten Kernteile 23 und die Auswerfer 24, 25 axial geführt sind. Alle zweiten Kernteile 23 sind an einer linear-verschieblichen Basisplatte 28 befestigt, insbesondere mittels Schrauben 46 verschraubt. Zur Führung der inneren und äußeren Auswerfer 24, 25 sind in der Basisplatte 28 axiale Öffnungen vorgesehen, durch die sich die Auswerfer 24, 25 hindurch erstrecken, die ihrerseits an einer gemeinsamen Auswerferplatte 26 befestigt sind. Diese Auswerferplatte 26 ist getrennt oder gemeinsam mit der Basisplatte 28 bewegbar. Die Basisplatte 28 liegt somit zwischen dem Führungsblock 21 und der Auswerferplatte 26, wobei im Ausgangszustand jeweils ein Abstand hier zwischen vorliegt.

Die Basisplatte 28 und die Auswerferplatte 26 sind in axialer Richtung linear beweglich angetrieben beispielsweise hydraulisch. Der Abstand zwischen der Platte 27 und der Basisplatte 28 sowie der Abstand zwischen der Basisplatte 28 und der Auswerferplatte 26 ist im dargestellten Zustand so gewählt, dass die Stirnseiten 34 der ersten Kernteile 22, die Stirnseiten 35 der zweiten Kernteile 23 sowie die Stirnseiten 36, 40 der inneren und äußeren Auswerfer 24, 25 eine glatte Fläche bilden.

In Fig. 2 befindet sich die Formmasse zur Herstellung des Laufrads 1 bereits in der Tragscheibenkavität 31 und in den Schaufelkavitäten 37. Die Schaufelkavitäten 37 können an ihren von der Tragscheibe 3 abgewandten Seite Rücksprünge 38 aufweisen, die auf den Schaufeloberkanten 14 des Laufrades 1 Materialvorsprünge 15 bilden, siehe Fig. 10a. Im Zentrum des Spritzgusswerkzeugs 19 ist ein Bolzen 43 angeordnet, der den die Nabe 8 bildenden Metallring hält. Der Metallring ist somit ein Einlegeteil, das vor dem Spritzgießen in das Spritzgusswerkzeug eingelegt wird.

Es sei jedoch angemerkt, dass die Nabe 8 nicht zwingend aus einem Einlegeteil aus Metall gebildet sein muss. Vielmehr kann sie auch einstückig mit der Tragscheibe 3 aus Kunststoff spritzgegossen werden.

Das Spritzgusswerkzeug 19 weist auf der dem Führungsblock 21 gegenüber liegenden Axialseite ein in den Figuren nicht dargestelltes, im Wesentlichen plattenförmiges Werkzeugteil auf, das die Tragscheibenkavität 31 auf der den Kernteilen 22, 23 abgewandten Seite begrenzt. Dieses Werkzeugteil ist entfernbar, vorzugsweise ebenfalls axial beweglich, so dass es vor der Entformung des Laufrades von diesem entfernt werden kann.

Zur Herstellung des Laufrades wird die Formmasse in die Schaufelkavitäten 37 und die Tragscheibenkavität 31 eingefüllt, wobei die Geometrie der Schaufeln 2 durch die Schaufelkavitäten 37 definiert sind und die die Schaufeln 2 tragende Seite der Tragscheibe 3 im Wesentlichen durch die Stirnseiten 34, 35 der ersten und zweiten Kernteile 22, 23 bestimmt ist. Die äußeren und inneren Auswerfer 24, 25 sind jeweils ringförmig derart verteilt, dass ihre Stirnseiten 36, 40 die Unterseite der Tragscheibe 3 beim Ausfahren gleichmäßig kraftbeanspruchen.

Zur Veranschaulichung des Verfahrens und der Anordnung der Kernteile 22, 23 zueinander im Ausgangszustand vor dem Spritzgießen ist in Fig. 4a ein Querschnitt entlang der Schnittlinie X-X in Fig. 3 rein schematisch dargestellt. Die Vorderseiten 30 der ersten Kernteile 22 und die Rückseiten 32 der zweiten Kernteile 23 bilden dabei in ihren Zwischenräumen die Schaufelkavitäten 37 und definieren auf diese Weise die Geometrie der Schaufeln 2 des Laufrades 1.

Die Geometrie der Tragscheibe 3 wird hingegen durch die Stirnseiten 34 der ersten Kernteile 22 und durch die Stirnseiten 35 der zweiten Kernteile 23 definiert. Zwischen den Schaufelkavitäten 37, d.h. innerhalb eines auszubildenden Strömungskanal 5, liegen ein erstes und ein zweites Kernteil 22, 23 jeweils unter Bildung einer Kontaktfläche an einander, die durch die Vorderseite 33 des zweiten Kernteils 23 und durch die Rückseite 29 des ersten Kernteils 22 gebildet ist.

In einer vorteilhaften Ausführungsvariante der Erfindung sind die Rückseiten 29 der ersten Kernteile 22 und die Vorderseiten 33 der zweiten Kernteile 23 achsparallel zur Laufradachse 45 orientiert und vollflächig in Kontakt, so dass die Formmasse nicht in die Zwischenräume eindringen kann.

In Fig. 4b ist ein Querschnitt entlang der Schnittlinie Y-Y aus Fig. 3 schematisch dargestellt, wobei zusätzlich zur Fig. 3 und in Ergänzung von Fig. 4a nun das Laufrad 1 mit seiner Tragscheibe 3 dargestellt ist. In dieser Darstellung sind die äußeren Auswerfer 24 sichtbar, wobei hier nur ein solcher Auswerfer 24 zu sehen ist. Die zweiten Kernteile 23 sind mit ihren Stirnseiten 36 mit der Tragscheibe 3 in Kontakt. Wie weiter in Fig. 4b gut zu erkennen ist, hinterschneiden die zweiten Kernteile 23 jeweils eine Schaufel 2, so dass diese Kernteile 23 zunächst nicht axial entformt werden können. Demgegenüber sind die Schaufeln 2 nicht mit Hinterschneidungen der ersten Kernteile 22 im Eingriff.

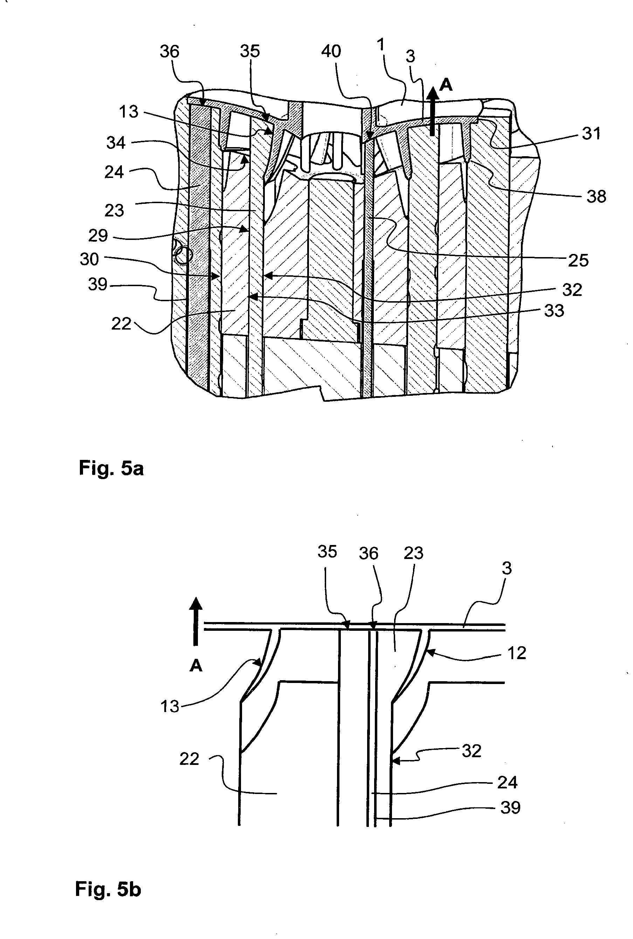

Zur Entformung des Laufrades 1 wird nun eine erste Relativbewegung A in axialer Richtung zwischen den ersten und zweiten Kernteilen 22, 23 ausgeführt, indem die zweiten Kernteile 23 von den ersten Kernteilen 22 mitsamt dem Laufrad 1 linear-axial weg bewegt werden. Ein Zwischen- oder Endzustand dieser ersten Relativbewegung ist in Fig. 5a und 5b gezeigt. Die Tragscheibe 3 des Laufrades 1 liegt dabei auf den Stirnseiten 35 der zweiten Kernteile 23, den Stirnseiten 36 der äußeren Auswerfer 24 und den Stirnseiten 40 der inneren Auswerfer 25 auf. Wie im Querschnitt entlang der Schnittlinie Y-Y der Fig. 5b dargestellt ist, wird durch die erste lineare-axiale Relativbewegung A zwischen der jeweiligen Schaufelrückseite 12 und dem entsprechenden ersten Kernteil 22 ein Freiraum geschaffen, in den sich das Laufrad zur Überwindung der Hinterschneidung an der Schaufelrückseite 13 hinein bewegen kann. Dies erfolgt durch eine zweite

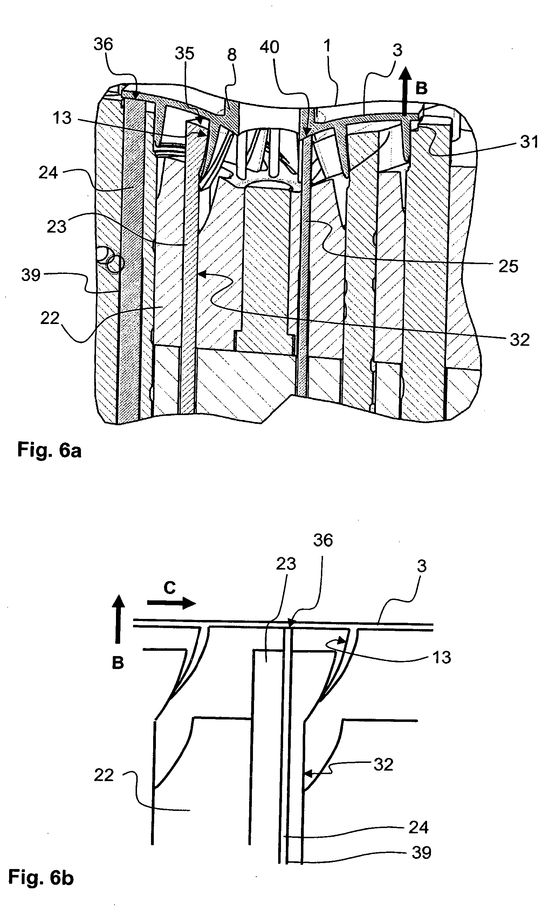

Hierzu wird das Laufrad 1 durch eine zweite axiale Relativbewegung B von den zweiten Kernteilen 23 weg gedrückt, wobei es eine erzwungene Drehbewegung C vollführt. Ein Zustand des Spritzgusswerks 19 kurz nach Beginn der zweiten Relativbewegung ist in den Fig. 6a und 6b gezeigt. Zum Wegdrücken wird durch die synchron bewegten inneren und äußeren Auswerfer 24 und 25 in axialer Richtung eine Kraft auf die Tragscheibe 3 ausgeübt, wobei sich die äußeren Auswerfer 24 aus den zweiten Kernteilen 23 heraus bewegen, so dass die Tragscheibe 3 des Laufrades 1 ausschließlich auf den Stirnseiten 36 der äußeren Auswerfer 24 sowie der inneren Auswerfer 25 aufliegt.

Die durch das Ausfahren der Auswerfer 24, 25 auf die Tragscheibe 3 ausgeübte Axialkraft überwindet zunächst die Haftreibung zwischen den Schaufelvorderseiten 13 und den Rückseiten 32 der zweiten Kernteile 23, wobei die Schaufeln 2 anschließend entlang der Rückseiten 32 der zweiten Kernteile 23 sowie die Tragscheibe 3 auf den Stirnseiten 36 der äußeren Auswerfer 24 und den Stirnseiten 40 der inneren Auswerfer 25 entlang gleitet und dabei die Drehbewegung C ausführt. Dabei gelangen die Schaufeln 2 zunehmend außer Eingriff mit den Hinterschneidungen, bis das Laufrad 1 vollständig von der Hinterschneidung frei ist.

In einer nicht dargestellten Ausführungsvariante der Erfindung wird die zweite axiale Relativbewegung B schon während der ersten Relativbewegung A durchgeführt. Dadurch lässt sich die Zeit, die zur Entformung des spritzgegossenen Laufrades 1 notwendig ist, reduzieren, da schon ein teilweise Durchführung der ersten axialen Relativbewegung A ausreicht um zwischen der Schaufelrückseiten 12 und den ersten Kernteilen 22 einen Freiraum zu schaffen, um die Hinterschneidungen der Schaufelvorderseiten 13 zu überwinden.

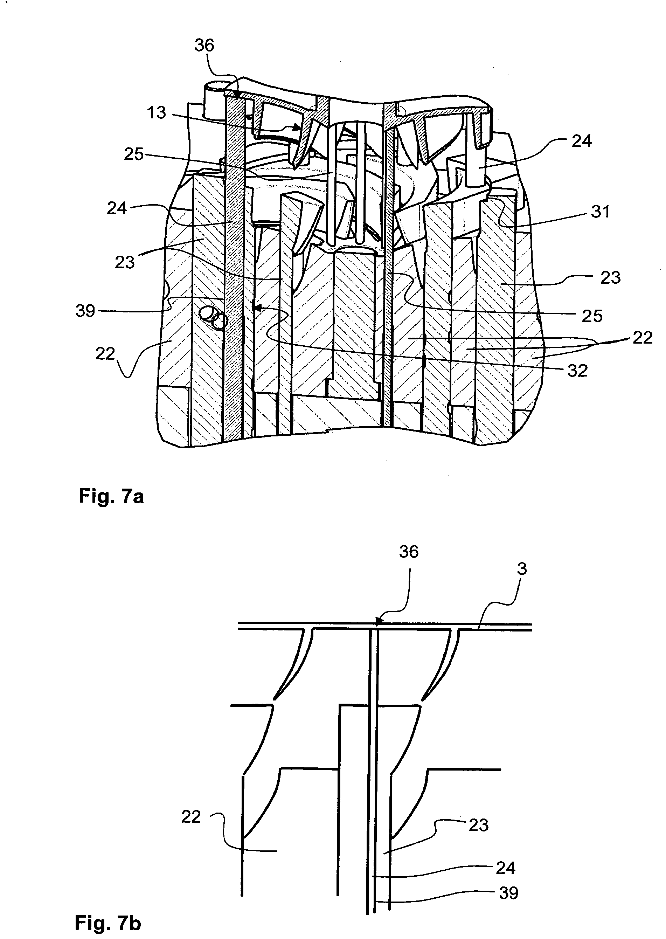

Die Fig. 7a und 7b zeigen den Endzustand, in dem die Auswerfer 24 und 25 komplett ausgefahren sind und die Hinterschneidungen gegenüber der Schaufelvorderseiten 13 komplett überwunden sind. Damit ist das spritzgegossene Laufrad 1 vollständig entformt und kann entweder manuell oder automatisch nachfolgenden Prozessschritten zugeführt werden.

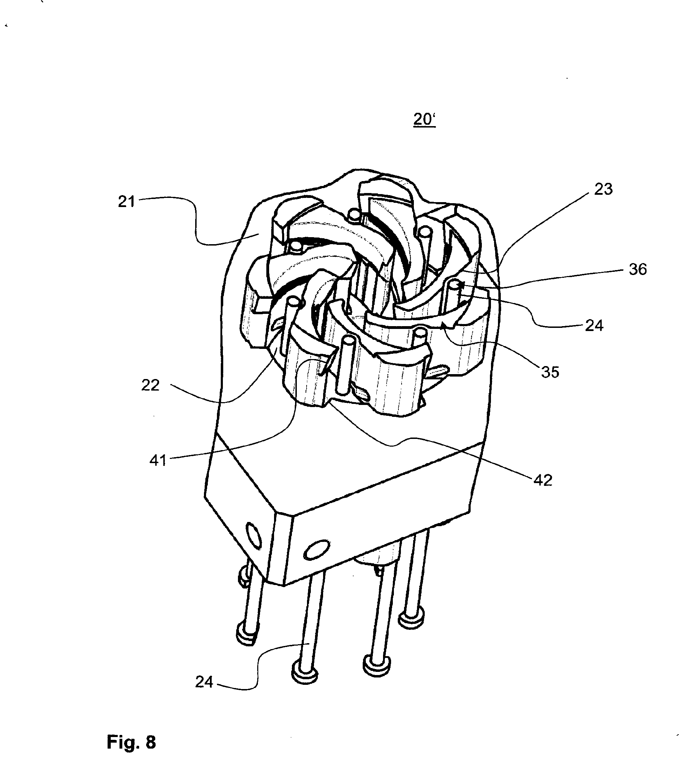

In Fig. 8 ist eine zweite Ausführungsvariante eines Formeinsatzes 20' des Spritzgusswerkzeugs 19 perspektivisch dargestellt, wobei diese Ausführungsvariante für Laufräder vorgesehen ist, die gegenüber den Laufrädern der Ausführungsvariante der Fig. 1 bis 7b einen kleineren Durchmesser aufweisen. Bei dieser zweiten Ausführungsvariante sind ausschließlich äußere Auswerfer 24 vorhanden, die zudem durch die ersten Kernteile 22 axial beweglich geführt und somit von diesen umschlossen sind.

Die Bewegungsabläufe sind bei der zweiten Ausführungsvariante analog zu ersten Ausführungsvariante. So wird eine erste linear-axiale Relativbewegung A ausgeführt, bei der die zweiten Kernteile 23, vorzugsweise mitsamt der Auswerfer 24, von den ersten Kernteilen 22 weg bewegt werden und dabei auch das Laufrad 1 von den ersten Kernteilen 22 weg bewegen. Anschließend wird eine zweite axiale Relativbewegung B ausgeführt, bei der die Auswerfer 24 über die axiale Erstreckung der zweiten Kernteile 23 hinaus bewegt werden. Dabei vollführt das Laufrad 1 die bereits beschriebene Drehbewegung.

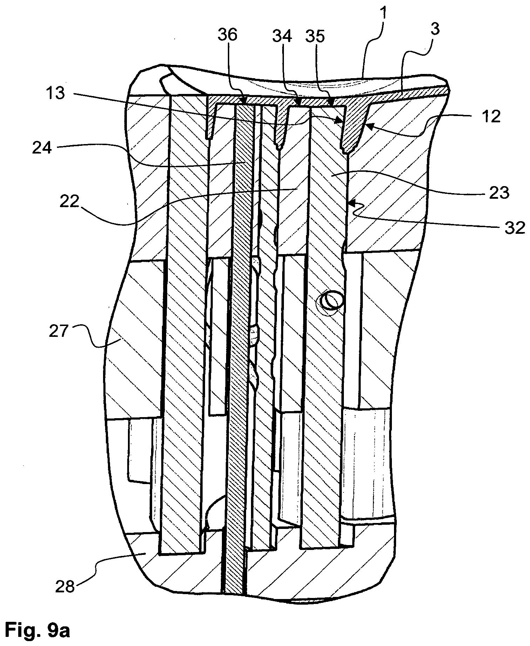

Ein Spritzgusswerkzeug 19, das den zweiten Formeinsatz 20' aus Fig. 8 aufweist, ist in Fig. 9a als Teilquerschnitt dargestellt. Beim Spritzvorgang bilden die Stirnseiten 34 der ersten Kernteile 22, die Stirnseiten 35 der zweiten Kernteile 23 und die Stirnseiten 36 der Auswerfer 24 eine glatte Fläche, die die innere axiale Stirnseite der Tragscheibe 3 definiert.

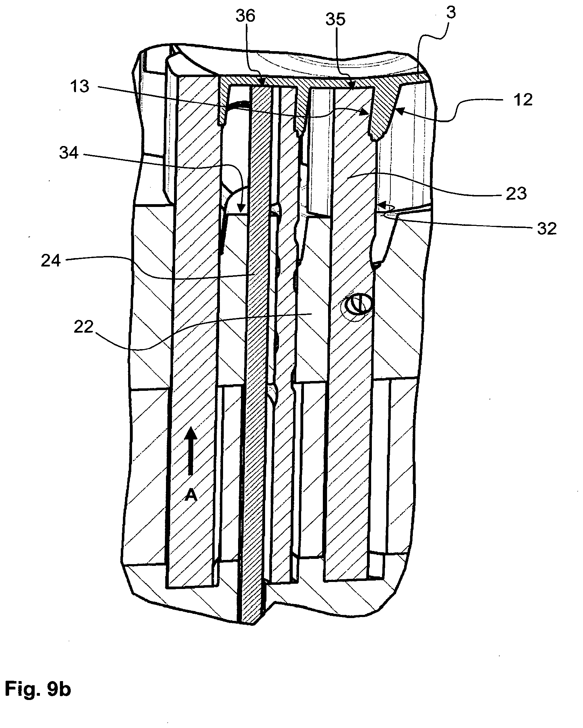

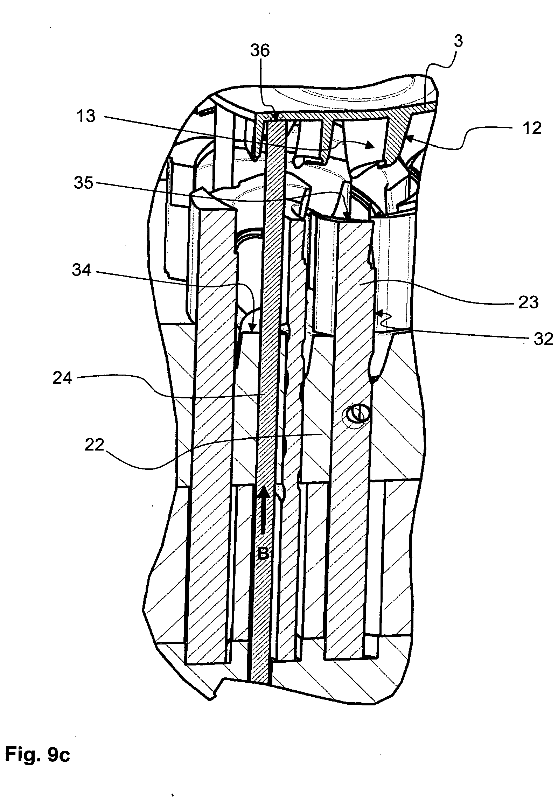

Zur Entformung des Laufrades 1 werden die zweiten Kernteile 23 und die Auswerfer 24, wie in Fig. 9b dargestellt, gegenüber den stationären ersten Kernteilen 22 axial bewegt, so dass das Laufrad 1 von den ersten Kernteilen 22 weg gedrückt wird. Auf diese Weise werden an den Schaufelrückseiten 12 Freiräume geschaffen, die zur Überwindung der Hinterschneidungen der Schaufelvorderseiten 13 vorgesehen sind. Zur Überwindung der Hinterschneidung werden nun, wie anhand von Fig. 9c zu erkennen ist, die Auswerfer 24 in axialer Richtung bewegt, so dass das spritzgegossene Laufrad 1 von den zweiten Kernteilen 23 in axialer Richtung weg gedrückt wird. Die Tragscheibe 3 liegt bei der zweiten Relativbewegung B ausschließlich auf den Stirnseiten 36 der Auswerfer 24 auf. Bei der Überwindung der Hinterschneidungen der Schaufelvorderseiten 13 gleiten die Schaufelvorderseiten 13 an den Rückseiten 32 der zweiten Kernteile 23, wobei die Drehbewegung C erzwungen wird. Dies führt dazu, dass die Tragscheibe 3 des Laufrades 1 auf den Stirnseiten 36 der Auswerfer 24 entlang gleitet. Das so entformte Laufrad 1 kann entweder manuell oder automatisch nachfolgenden Produktionsprozessen zugeführt werden.

Nach dem das Laufrad 1 aus dem Spritzgusswerkzeug 19 entfernt worden ist, besitzt es die in Fig. 10a dargestellte offene Form. Zusätzlich wird die in Fig. 10b gezeigte Deckscheibe 4 auf die Schaufeln 2 montiert. Das fertige Laufrad 1 ist in Fig. 11 gezeigt. Wie ferner in Fig. 10b zu sehen ist, weist die Deckscheibe 4 einen Saugmund 10 auf, der in axialer Richtung durch einen Saughals 11 verlängert ist. Die zu fördernde Flüssigkeit wird typischerweise durch den Saugmund 10 angesaugt und vom inneren Schaufelende 7 zum äußeren Schaufelende 6 durch die Strömungskanäle 5 geführt.

Zur Befestigung der Deckscheibe auf den Schaufeln 2, können die Schaufeloberkanten 14 in Längsrichtung der Schaufeln 2 zumindest teilweise Materialvorsprünge 15 aufweisen, die von korrespondierenden nicht dargestellten Nuten der der Tragscheibe 3 zugewandten Unterseite der Deckscheibe 4 aufgenommen werden. Vorzugsweise wird zur Verbindung der Deckscheibe 4 mit den Schaufeloberkanten 14 ein Ultraschallschweißverfahren angewendet, das eine dauerhafte stoffschlüssige Fixierung sicherstellt und vorteilhafterweise keine Kleberückstände verursacht.

Das erfindungsgemäße Verfahren und das dieses ausführende Spritzgusswerkzeug bieten die Möglichkeit, ein Laufrad, insbesondere das Laufrad einer Kreiselpumpe, das in zumindest zwei Raumrichtungen gekrümmte Schaufeln aufweist, auf einfache Weise herzustellen und durch die Entformung des Laufrades in axiale Richtung verkürzte Verfahrwege zu erzielen und damit die Produktionszeiten zu verkürzen. Zudem wird eine kompakte Bauweise des Spritzgusswerkzeugs ermöglicht, die aufgrund der wenigen, ausschließlich linear beweglichen Komponenten, einen geringen Wartungsaufwand aufweist und einen kompakten Aufbau ermöglicht.

### Bezugszeichenliste

- 1: Pumpenlaufrad
- 2: Schaufel
- 3: Tragscheibe
- 4: Deckscheibe
- 5: Strömungskanal
- 6: äußeres Schaufelende
- 7: inneres Schaufelende
- 8: Nabe
- 9: Öffnung
- 10: Saugmund
- 11: Saughals
- 12: Schaufelrückseite
- 13: Schaufelvorderseite
- 14: Schaufeloberkante
- 15: Materialvorsprung
- 19: Spritzgusswerkzeug
- 20: erster Formeinsatz
- 20': zweiter Formeinsatz
- 21: Führungsblock
- 22: erstes Kernteil (stationär)
- 23: zweites Kernteil (bewegt)
- 24: äußerer Auswerfer
- 25: innerer Auswerfer
- 26: Auswerferplatte
- 27: Platte
- 28: Basisplatte
- 29: Rückseite der ersten Kernteile
- 30: Vorderseite der ersten Kernteile
- 31: Tragscheibenkavität
- 32: Rückseite des zweiten Kernteils
- 33: Vorderseite des zweiten Kernteils
- 34: Stirnseite des ersten Kernteils
- 35: Stirnseite des zweiten Kernteils
- 36: Stirnseite der äußeren Auswerfer
- 37: Schaufelkavität
- 38: Rücksprung
- 39: Auswerferführung
- 40: Stirnseite der inneren Auswerfer
- 41: Vorsprung
- 42: Vertiefung
- 43: Bolzen
- 44: Ring
- 45: Laufradachse
- 46: Schraube
- 47: Trennlinie

- X-X: innere Schnittlinie
- Y-Y: äußere Schnittlinie
- A: erste axiale Relativbewegung
- B: zweite axiale Relativbewegung
- C: Drehbewegung
- D: Drehrichtung

## Patentansprüche

1. Verfahren zur Herstellung eines Pumpenlaufrades (1), insbesondere für ein Laufrad einer Kreiselpumpe, durch Spritzgießen, das in zumindest zwei Raumrichtungen gekrümmte Schaufeln (2) auf einer Tragscheibe (3) und zwischen diesen vorwiegend in radialer Richtung verlaufende Strömungskanäle (5) aufweist, die jeweils durch mindestens zwei Kernteile (22, 23) definiert werden, von denen ein erstes Kernteil (22) hinterschneidungsfrei in dem entsprechenden Strömungskanal (5) einliegt und ein zweites Kernteil (23) mit einer Hinterschneidung im Strömungskanal (5) in Eingriff steht, wobei das erste und zweite Kernteil (22, 23) jedes Strömungskanals (5) in Umfangsrichtung hintereinander angeordnet sind, und zur Entformung des spritzgegossenen Laufrades (1) zunächst eine erste, linear-axiale Relativbewegung zwischen den ersten Kernteilen (22) und dem Laufrad (1) erfolgt, wobei anschließend das Laufrad (1) durch eine zweite Relativbewegung in axialer Richtung von den zweiten Kernteilen (23) unter Vollführung einer Drehbewegung weg bewegt wird, **dadurch gekennzeichnet, dass** Auswerfer (24, 25) das spritzgegossene Laufrad (1) bei der zweiten Relativbewegung von den zweiten Kernteilen (23) in axialer Richtung wegdrücken.

2. Verfahren nach Anspruch 1, **dadurch gekennzeichnet, dass** bei der ersten Relativbewegung die zweiten Kernteile (23) das spritzgegossene Laufrad (1) von den ersten Kernteilen (22) in axialer Richtung wegdrücken.

3. Verfahren nach einem der vorherigen Ansprüche, **dadurch gekennzeichnet, dass** die zweite Relativbewegung schon während der ersten Relativbewegung beginnt.

4. Verfahren nach einem der vorherigen Ansprüche, **dadurch gekennzeichnet, dass** die Auswerfer innerhalb der zweiten Kernteile (23) axial geführt sind.

5. Verfahren nach einem der vorherigen Ansprüche, **dadurch gekennzeichnet, dass** eine separat hergestellte Deckscheibe (4) auf den Oberkanten (14) der Schaufeln (2) des entformten Laufrades (1) befestigt wird.

6. Spritzgusswerkzeug (19) zur Herstellung eines Pumpenlaufrades (1), insbesondere für ein Laufrad einer Kreiselpumpe, durch Spritzgießen, das in zumindest zwei Raumrichtungen gekrümmte Schaufeln (2) auf einer Tragscheibe (3) und zwischen diesen vorwiegend in radialer Richtung verlaufende Strömungskanäle (5) aufweist, wobei das Spritzgusswerkzeug zwei Kernteile (22,23) umfasst, wobei die Strömungskanäle (5) jeweils mindestens durch die zwei Kernteile (22,23) definiert sind, von denen ein erstes Kernteil (22) hinterschneidungsfrei in dem entsprechenden Strömungskanal (5) einliegt und ein zweites Kernteil (23) mit einer Hinterschneidung im Strömungskanal (5) in Eingriff steht, wobei das erste und zweite Kernteil (22, 23) jedes Strömungskanals (5) in Umfangsrichtung hintereinander angeordnet und relativ zueinander in axialer Richtung bewegbar sind, wobei das Spritzgusswerkzeug (19) zur Entformung des spritzgegossenen Laufrades (1) eingerichtet ist, zunächst eine erste, linear-axiale Relativbewegung zwischen den ersten Kernteilen (22) und dem Laufrad (1) durchzuführen, um die ersten Kernteile (22) aus den Strömungskanälen (5) zu bewegen, und anschließend das Laufrad (1) durch eine zweite Relativbewegung in axialer Richtung von den zweiten Kernteilen (23) unter Vollführung einer Drehbewegung wegzubewegen, **dadurch gekennzeichnet, dass** das Spritzgusswerkzeug (19) axial bewegliche Auswerfer (24,25) aufweist, um das Laufrad (1) bei der zweiten Relativbewegung von den zweiten Kernteilen (23) weg bewegen zu können.

7. Spritzgusswerkzeug (19) nach Anspruch 6, **dadurch gekennzeichnet, dass** die ersten Kernteile (22) einteilig mit einem stationären Führungsblock (21) ausgebildet sind, in dem die zweiten Kernteile (23) zwischen den ersten Kernteilen (22) axialbeweglich geführt sind.

8. Spritzgusswerkzeug (19) nach Anspruch 6 oder 7, **dadurch gekennzeichnet, dass** die ersten Kernteile (22) an ihren radial innenliegenden Enden in einen eine Laufradnabe (8) zumindest mit definierenden Ring (44) übergehen.

9. Spritzgusswerkzeug (19) nach Anspruch 6, 7 oder 8, **dadurch gekennzeichnet, dass** das erste Kernteil (22) und das zweite Kernteil (23) jedes Strömungskanals (5) eine achsparallel zur Laufradachse (45) orientierte Kontaktfläche aufweisen.

10. Spritzgusswerkzeug (19) nach einem der Ansprüche 6 bis 9, **dadurch gekennzeichnet, dass** die Auswerfer (24) in den zweiten Kernteilen (23) axial beweglich geführt sind.

11. Spritzgusswerkzeug (19) nach einem der Ansprüche 6 bis 10, **dadurch gekennzeichnet, dass** die Auswerfer (24) eine erste äußere, ringförmige Anordnung bilden und eine zweite ringförmige Anordnung innerer Auswerfer (25) in den ersten Kernteilen (22) insbesondere an den radial innenliegenden Enden der ersten Kernteile (22) beweglich geführt ist.

12. Spritzgusswerkzeug (19) nach einem der Ansprüche 6 bis 11, **dadurch gekennzeichnet, dass** alle zweiten Kernteile (23) auf oder an einer gemeinsamen, linear-verschieblichen Basisplatte (28) befestigt sind.

13. Spritzgusswerkzeug (19) nach einem der Ansprüche 6 bis 12, **dadurch gekennzeichnet, dass** die Auswerfer (24, 25) auf oder an einer gemeinsamen, linear-verschieblichen Auswerferplatte (26) befestigt sind.

14. Spritzgusswerkzeug (19) nach Anspruch 13, **dadurch gekennzeichnet, dass** die Basisplatte (28) zwischen dem Führungsblock (21) und der Auswerferplatte (26) angeordnet ist und die Auswerfer (24, 25) in der Basisplatte (28) geführt sind.

## Claims

1. Method for the production of a pump impeller (1), notably for an impeller of a centrifugal pump by means of injection moulding, having vanes (2) curved in at least two spatial directions on a support plate (3) and between these, flow channels (5) running primarily in a radial direction, respectively defined by at least two core elements (22, 23), of which a first core element (22) lies in the corresponding flow channel (5) without an undercut and a second core element (23) engages in the flow channel (5) with an undercut, in which the first and second core elements (22, 23) of each flow channel (5) are arranged one behind the other in the circumferential direction, and for the purpose of demoulding the injection moulded impeller (1), an initial, linear-axial relative movement between the first core elements (22) and the impeller (1) first takes place, in which the impeller (1) is subsequently moved away from the second core elements (23) by means of a second relative movement in the axial direction by performing a rotary motion, **characterised by** ejectors (24, 25) pushing the injection moulded impeller (1) away from the second core elements (23) in the axial direction during the second relative movement.

2. Method according to claim 1, **characterised by** the second core elements (23) pushing the injection moulded impeller (1) away from the first core elements (22) in the axial direction during the first relative movement.

3. Method according to one of the preceding claims, **characterised by** the second relative movement already beginning during the first relative movement.

4. Method according to one of the preceding claims, **characterised by** the ejectors being axially guided within the second core elements (23).

5. Method according to one of the preceding claims, **characterised by** a separately manufactured cover plate (4) being attached on the top edges (14) of the vanes (2) of the demoulded impeller (1).

6. Injection moulding tool (19) for the production of a pump impeller (1), notably an impeller of a centrifugal pump by means of injection moulding, having vanes (2) curved in at least two spatial directions on a support plate (3) and between these, flow channels (5) running primarily in a radial direction, in which the injection moulding tool comprises two core elements (22, 23) with flow channels (5) respectively defined by at least two core elements (22, 23), of which a first core element (22) lies in the corresponding flow channel (5) without an undercut and a second core element (23) engages in the flow channel (5) with an undercut, in which the first and second core elements (22, 23) of each flow channel (5) are arranged one behind the other in the circumferential direction and are moveable relative to each other in the axial direction, in which the injection moulding tool (19), for the purpose of demoulding the injection moulded impeller (1), is configured to first perform an initial, linear-axial relative movement between the first core elements (22) and the impeller (1) in order to move the first core elements (22) out of the flow channels (5) and to subsequently move the impeller (1) away from the second core elements (23) by means of a second relative movement in the axial direction by performing a rotary motion, **characterised by** the injection moulding tool (19) having axially moveable ejectors (24, 25) for the purpose of moving the impeller (1) away from the second core elements (23) during the second relative movement.

7. Injection moulding tool (19) according to claim 6, **characterised by** the first core elements (22) being formed as one piece with a stationary guide block (21) in which the second core elements (23) are axially moveable and guided between the first core elements (22).

8. Injection moulding tool (19) according to claim 6 or 7, **characterised by** the first core elements (22) on their radial inner ends transitioning into a runner hub (8) with at least one defined ring (44).

9. Injection moulding tool (19) according to claim 6, 7 or 8, **characterised by** the first core element (22) and the second core element (23) of each flow channel (5) having a contact surface oriented axially parallel to the impeller axis (45).

10. Injection moulding tool (19) according to one of the claims 6 through 9, **characterised by** the ejectors (24) being axially moveable and guided in the second core elements (23).

11. Injection moulding tool (19) according to one of the claims 6 through 10, **characterised by** the ejectors (24) forming a first outer, ring-shaped arrangement, and a second ring-shaped arrangement of inner ejectors (25) being moveable and guided in the first core elements (22), notably on the radial inner ends of the first core elements (22).

12. Injection moulding tool (19) according to one of the claims 6 through 11, **characterised by** all second core elements (23) being mounted on a joint base plate (28) capable of linear movement.

13. Injection moulding tool (19) according to one of the claims 6 through 12, **characterised by** the ejectors (24, 25) being mounted on a joint ejector plate (26) capable of linear movement.

14. Injection moulding tool (19) according to claim 13, **characterised by** the base plate (28) being arranged between the guide block (21) and the ejector plate (26) and the ejectors (24, 25) being guided in the base plate (28).

## Revendications

1. Procédé de fabrication d'un rotor de pompe (1), en particulier pour un rotor de pompe centrifuge, par moulage par injection, présentant sur un disque porteur (3) des aubes (2) courbées dans au moins deux directions spatiales entre lesquelles s'étendent, principalement dans la direction radiale, des canaux d'écoulement (5) définis chacun par au moins deux parties de noyau (22, 23), une première partie de noyau (22) étant insérée sans échancrure dans le canal d'écoulement (5) correspondant et une seconde partie de noyau (23) est en prise avec échancrure dans le canal d'écoulement (5), sachant que la première et la seconde partie de noyau (22, 23) de chaque canal d'écoulement (5) sont disposées l'une derrière l'autre dans la direction circonférentielle, et que le démoulage du rotor (1) moulé par injection, requiert d'abord un premier mouvement relatif linéaire-axial entre les premières parties de noyau (22) et le rotor (1), le rotor (1) étant ensuite éloigné des secondes parties de noyau (23) par un second mouvement relatif dans la direction axiale en effectuant un mouvement de rotation, **caractérisé en ce que** des éjecteurs (24, 25) repoussent le rotor (1) moulé par injection dans la direction axiale lors du second mouvement relatif des secondes parties de noyau (23).

2. Procédé selon la revendication 1, **caractérisé en ce que,** lors du premier mouvement relatif, les secondes parties de noyau (23) repoussent le rotor moulé par injection (1) des premières parties de noyau (22) en direction axiale.

3. Procédé selon l'une des revendications précédentes, **caractérisé en ce que** le second mouvement relatif commence pendant le premier mouvement relatif.

4. Procédé selon l'une des revendications précédentes, **caractérisé en ce que** les éjecteurs sont guidés axialement à l'intérieur des secondes parties de noyau (23).

5. Procédé selon l'une des revendications précédentes, **caractérisé en ce qu'**un disque de couverture (4) fabriqué séparément est fixé sur les bords supérieurs (14) des auges (2) du rotor (1) démoulé.

6. Outil de moulage par injection (19) de fabrication d'un rotor de pompe (1), en particulier pour un rotor de pompe centrifuge, par moulage par injection, présentant sur un disque porteur (3) des aubes (2) courbées dans au moins deux directions spatiales entre lesquelles s'étendent, principalement dans la direction radiale, des canaux d'écoulement (5), sachant que l'outil de moulage par injection comprend deux parties de noyau (22, 23), sachant que les canaux d'écoulement (5) sont au moins définis chacun par au moins deux parties de noyau (22, 23), une première partie de noyau (22) étant insérée sans échancrure dans le canal d'écoulement (5) correspondant et une seconde partie de noyau (23) est en prise avec échancrure dans le canal d'écoulement (5), sachant que la première et la seconde partie de noyau (22, 23) de chaque canal d'écoulement (5) sont disposées l'une derrière l'autre dans la direction circonférentielle et mobiles l'une par rapport à l'autre dans la direction axiale, sachant que l'outil de moulage par injection (19) est conçu, pour le démoulage du rotor (1) moulé par injection, pour effectuer d'abord un premier mouvement relatif linéaire-axial entre les premières parties de noyau (22) et le rotor (1) pour déplacer les premières parties de noyau (22) hors des canaux d'écoulement (5), et ensuite à éloigner le rotor (1) des secondes parties de noyau (23) par un second mouvement relatif dans la direction axiale en exécutant un mouvement de rotation, **caractérisé en ce que** l'outil de moulage par injection (19) présente des éjecteurs (24, 25) mobiles axialement pour pouvoir éloigner le rotor (1) des secondes parties de noyau (23) lors du second mouvement relatif.

7. Outil de moulage (19) selon la revendication 6, **caractérisé en ce que** les premières parties de noyau (22) sont formés d'une seule pièce avec un bloc de guidage fixe (21), dans lequel les secondes parties de noyau (23) sont guidées pour se déplacer axialement entre les premières parties de noyau (22).

8. Outil de moulage (19) selon la revendication 6 ou 7, **caractérisé en ce que** les premières parties de noyau (22) se deviennent, à leurs extrémités situées radialement à l'intérieur, un anneau (44) définissant au moins partiellement un moyeu de rotor (8).

9. Outil de moulage (19) selon la revendication 6, 7 ou 8, **caractérisé en ce que** la première partie de noyau (22) et la seconde partie de noyau (23) de chaque canal d'écoulement (5) présentent une surface de contact orientée parallèlement à l'axe du rotor (45).

10. Outil de moulage (19) selon l'une des revendications 6 à 9, **caractérisé en ce que** les éjecteurs (24) sont guidés axialement de manière mobile dans les secondes parties de noyau (23).

11. Outil de moulage (19) selon l'une des revendications 6 à 10, **caractérisé en ce que** les éjecteurs (24) forment un premier agencement annulaire extérieur et **en ce qu'**un second agencement annulaire d'éjecteurs intérieurs (25) est guidé de manière mobile dans les premières parties de noyau (22), en particulier aux extrémités radialement intérieures des premières parties de noyau (22).

12. Outil de moulage (19) selon l'une des revendications 6 à 11, **caractérisé en ce que** les secondes parties de noyau (23) sont fixées sur ou à une plaque de base commune (28) à déplacement linéaire.

13. Outil de moulage (19) selon l'une des revendications 6 à 12, **caractérisé en ce que** les éjecteurs (24, 25) sont fixés sur ou à une plaque d'éjecteurs commune (26) à déplacement linéaire.

14. Outil de moulage (19) selon la revendication 13, **caractérisé en ce que** la plaque de base (28) est placée entre le bloc de guidage (21) et la plaque d'éjecteurs (26) et les éjecteurs (24, 25) sont guidés dans la plaque de base (28).
